# EUROPEAN PATENT APPLICATION

(11) **EP 2 657 808 A2**
(43) Date of publication of application: **30.10.2013**
(21) Application number: 13162232.6
(22) Date of filing: 03.04.2013
(51) Int. Cl.: G06F 1/26

(54) **Wake-up circuit and electronic device**

(30) Priority: 28.04.2012 CN 201210129473
(71) Applicant: Hong Fu Jin Precision Industry (ShenZhen) Co., Ltd., Shenzhen City, Guangdong 518109 (CN); Hon Hai Precision Industry Co., Ltd., New Taipei City (TW)
(72) Inventor: Ma, Bin-Song, Shenzhen City, Guangdong Province (CN)
(74) Representative: Gray, John James

(57) **Abstract**

A wake-up circuit (300) includes a receiving unit (30) receiving a wake-up signal, a control unit (32), a voltage converter (34), and a processing unit (36). The control unit (32) continuously generating an enable signal for a first predetermined time period when the receiving unit (30) receives the wake-up signal and stopping generating the enable signal after the first predetermined time period. The power supply (100) provides a secondary voltage to the voltage converter (34) when the electronic device (900) is in the standby state, and the voltage converter (34) converts the secondary voltage to a working voltage when the voltage converter (34) receives the enable signal and forgoes generating the working voltage when the voltage converter (34) fails to receive the enable signal. The processing unit (36) is powered by the working voltage to generate the enable signal and output the enable signal to the voltage converter (34), the processing unit (36) further generates a control signal when the processing unit (36) determines that the wake-up signal is a power-on command, the control signal controls the power supply (100) to power the load (200).

## Description

Electronic devices include a power supply, a load, and a processing unit. When an electronic device is in a power-on state, the power supply powers the load. When the electronic device is in a standby state, the power supply stops powering the load. When the electronic device is in a standby state, the processing unit needs to be powered by the power supply, thus the processing unit can receive a external input command and generate a wake-up signal in response to the external input command, and the power supply powers the load in response to the wake-up signal.

However, the processing unit is an important electronic component of the electronic device, the power consumption of the processing unit is very large, and this is not efficient for the electronic device when the electronic device is in the standby state.

Therefore, there is room for improvement in the art.

### Summary

According to an exemplary embodiment of the invention, a wake-up circuit used in an electronic device, the electronic device includes a power supply and a load, the power supply stops powering the load when the electronic device is in a standby state. The wake-up circuit includes a receiving unit receiving a wake-up signal, a control unit continuously generating an enable signal for a first predetermined time period when the receiving unit receives the wake-up signal and stopping generating the enable signal after the first predetermined time period, a voltage converter, and a processing unit. The power supply provides a secondary voltage to the voltage converter when the electronic device is in the standby state; the voltage converter converts the secondary voltage to a working voltage when the voltage converter receives the enable signal and forgoes generating the working voltage when the voltage converter fails to receive the enable signal. The processing unit is powered by the working voltage to generate the enable signal and output the enable signal to the voltage converter, the processing unit further generates a control signal when the processing unit determines that the wake-up signal is a power-on command, the control signal controls the power supply to power the load.

### BRIEF DESCRIPTION OF THE DRAWINGS

The components of the drawings are not necessarily drawn to scale, the emphasis instead being placed upon clearly illustrating the principles of the embodiments of an electronic device. Moreover, in the drawings, like reference numerals designate corresponding parts throughout two views.

FIG. 1 is a block diagram of an electronic device in accordance with one embodiment.

FIG. 2 is a circuit diagram of the electronic device in FIG. 1 in accordance with one embodiment.

### DETAILED DESCRIPTION

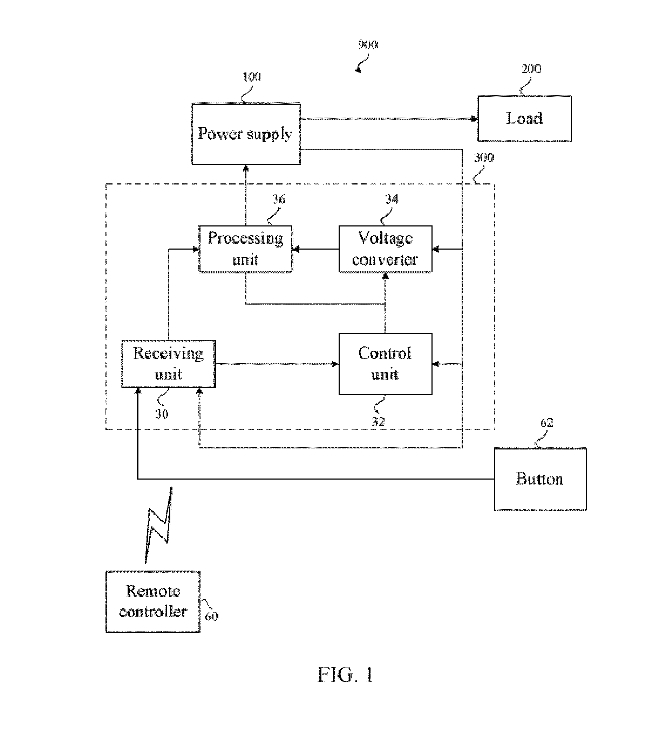

Referring to FIG. 1, an electronic device 900 includes a power supply 100, a load 200, and a wake-up circuit 300. The electronic device 900 is capable of being switched between a power-on state and a standby state. When the electronic device 900 is in the power-on state, the power supply 100 powers the load 200 and the wake-up circuit 300. When the electronic device 900 is in the standby state, the power supply 100 stops powering the load 200 and powers the wake-up circuit 300.

The wake-up circuit 300 includes a receiving unit 30, a control unit 32, a voltage converter 34, and a processing unit 36.

In detail, the power supply 100 powers the receiving unit 30 when the electronic device 900 is in the standby state. The receiving unit 30 is used for receiving an external wake-up signal. In this embodiment, the receiving unit 30 is an infrared receiving unit, the receiving unit 30 receives the wake-up signal wirelessly from a remote controller 60 when the remote controller 60 is operated by a user, for example, a wake-up key of the remote controller 60 is pressed by the user. In other embodiments, a button 62 is disposed on the electronic device 900, the receiving unit 30 receives the wake-up signal when the button 62 is pressed.

The power supply 100 provides a secondary voltage to the control unit 32 when the electronic device 900 is in the standby state. The control unit 32 continuously generates an enable signal for a first predetermined time period when the receiving unit 30 receives the wake-up signal and stops generating the enable signal after the first predetermined time period.

The power supply 100 provides a secondary voltage to the voltage converter 34 when the electronic device 900 is in the standby state. The voltage converter 34 converts the secondary voltage to a working voltage when the voltage converter 34 receives the enable signal and forgoes generating the working voltage when the voltage converter 34 fails to receive the enable signal.

The processing unit 36 is powered by the working voltage to generate the enable signal and output the enable signal to the voltage converter 34, therefore, after the first predetermined time period, the enable signal generated by the processing unit 36 continues to be supplied to the voltage converter 34, so that the voltage converter 34 continues to generate the working voltage. The processing unit 36 further generates a control signal when the processing unit determines that the wake-up signal received by the receiving unit 30 is a power-on command, the power supply 100 powers the load 200 in response to the control signal. Therefore, the electronic device 900 is switched from the standby state to the power-on state.

The processing unit 36 stops generating the enable signal and the control signal when the processing unit 36 determines that the wake-up signal received by the receiving unit 30 is not the power-on command, therefore the voltage converter 34 stops outputting the working voltage to the processing unit 36 after the first predetermined time period, and the electronic device 900 is still in the standby state.

In detail, the receiving unit 30 continuously generates a first level signal for the first predetermined time period when the receiving unit 30 receives a wake-up signal and stopping generating the first level signal after the first predetermined time period. The receiving unit 30 further generates a second level signal when the receiving unit 30 does not receive the wake-up signal.

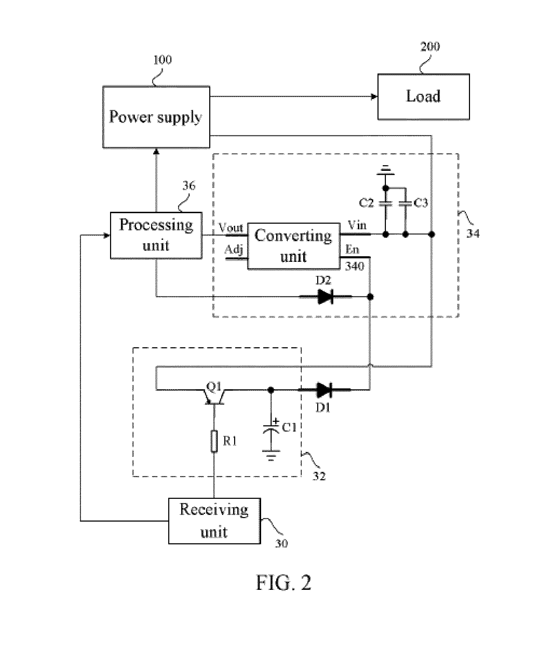

The control unit 32 includes an electrolytic capacitor (see FIG. 2) and is charged-up by the secondary voltage in response to the first level signal to generate the enable signal, the control unit 32 discharges in response to the second level signal to generate the enable signal, the first predetermined time period is equal to a sum of the charging time period and the discharging time period.

Referring to FIG. 2, the voltage converter 34 includes an enable terminal 340 for receiving the enable signal. The control unit 32 includes a transistor Q1 and an electrolytic capacitor C1, a base of the transistor Q1 receives the first level signal or the second level signal from the receiving unit 30, an emitter of the transistor Q1 receives the secondary voltage from the power supply 100, an anode of the electrolytic capacitor C1 is connected to a collector of the transistor Q1, a cathode of the electrolytic capacitor C1 is grounded. In this embodiment, the transistor Q1 is a pnp type bipolar junction transistor, the first level signal is a low level signal, the second level signal is a high level signal.

The wake-up circuit 300 includes a first diode D1 and a second diode D2. An anode of the first diode D1 is connected to the anode of the electrolytic capacitor C1, a cathode of the first diode D1 is connected to the enable terminal 340. An anode of the second diode D2 is connected to the processing unit 36, a cathode of the second diode D2 is connected to the enable terminal 340.

The principal of the wake-up circuit 300 is described, when the receiving unit 30 receives the wake-up signal, the receiving unit 30 generates the low level signal. Therefore, the transistor Q1 is turned on by the low level signal, and the electrolytic capacitor C1 is charged-up by the secondary voltage from the power supply 100, so that the enable signal is generated and is transmitted to the enable terminal 340 of the voltage converter 34.

When the receiving unit 30 does not receive the wake-up signal, the receiving unit 30 generates the high level signal. Therefore, the transistor Q1 is turned off by the high level signal, and the electrolytic capacitor C1 is discharged, so that the enable signal is also generated and is transmitted to the enable terminal 340 of the voltage converter 34.

In the electronic device 900, when the electronic device 900 is in the standby state, the processing unit 36 is not powered by the power supply 100, and the power consumption of the electronic device 900 is effectively reduced.

Further alternative embodiments will become apparent to those skilled in the art without departing from the spirit and scope of what is claimed. Accordingly, the present invention should be deemed not to be limited to the above detailed description, but rather only by the claims that follow and equivalents thereof.

## Claims

1. A wake-up circuit used in an electronic device, the electronic device comprising a power supply and a load, the power supply stopping powering the load when the electronic device is in a standby state, the wake-up circuit comprising:
a receiving unit receiving a wake-up signal;
a control unit continuously generating an enable signal for a first predetermined time period when the receiving unit receives the wake-up signal and stopping generating the enable signal after the first predetermined time period;
a voltage converter; and
a processing unit;
wherein the power supply provides a secondary voltage to the voltage converter when the electronic device is in the standby state; the voltage converter converts the secondary voltage to a working voltage when the voltage converter receives the enable signal and forgoes generating the working voltage when the voltage converter fails to receive the enable signal;
and
wherein the processing unit is powered by the working voltage to generate the enable signal and output the enable signal to the voltage converter, the processing unit further generates a control signal when the processing unit determines that the wake-up signal is a power-on command, the control signal controls the power supply to power the load.

2. The wake-up circuit of claim 1, wherein the processing unit stops generating the enable signal and the control signal when the processing unit determines that the wake-up signal is not the power-on command, and the voltage converter stops outputting the working voltage to the processing unit after the first predetermined time period.

3. The wake-up circuit of claim 1 or 2, wherein the power supply powers the receiving unit and provides the secondary voltage to the control unit when the electronic device is in the standby state, the receiving unit continuously generates a first level signal for the first predetermined time period when the receiving unit receives a wake-up signal and stops generating the first level signal after the first predetermined time period, the receiving unit generates a second level signal when the receiving unit does not receive the wake-up signal.

4. The wake-up circuit of claim 3, wherein the control unit is charged-up by the secondary voltage in response to the first level signal to generate the enable signal, the control unit discharges in response to the second level signal to generate the enable signal, the first predetermined time period is equal to a sum of the charging time period and the discharging time period.

5. The wake-up circuit of claim 4, wherein the voltage converter comprises an enable terminal for receiving the enable signal, the control unit comprises a transistor and an electrolytic capacitor, a base of the transistor receives the first level signal or the second level signal, an emitter of the transistor receives the secondary voltage, an anode of the electrolytic capacitor is connected to a collector of the transistor and the enable terminal, a cathode of the electrolytic capacitor is grounded.

6. The wake-up circuit of claim 5, wherein the transistor is a PNP type bipolar junction transistor, the first level signal is a low level signal, the second level signal is a high level signal.

7. The wake-up circuit of claim 5 or 6, further comprising a first diode, wherein an anode of the first diode is connected to the anode of the electrolytic capacitor, a cathode of the first diode is connected to the enable terminal.

8. The wake-up circuit of claim 5, 6 or 7, further comprising a second diode,
wherein an anode of the second diode is connected to the processing unit, a cathode of the second diode is connected to the enable terminal.

9. The wake-up circuit of any preceding claim, wherein the receiving unit is an infrared receiving unit, the receiving unit receives the wake-up signal wirelessly from a remote controller.

10. The wake-up circuit of any preceding claim, wherein a button is disposed on the electronic device, the receiving unit receives the wake-up signal when the button is pressed.

11. An electronic device, comprising:
a load;
a power supply, the power supply stopping powering the load when the electronic device is in a standby state; and
a wake-up circuit, the wake-up circuit comprising:
a receiving unit receiving a wake-up signal;
a control unit continuously generating an enable signal for a first predetermined time period when the receiving unit receives the wake-up signal and stopping generating the enable signal after the first predetermined time period;
a voltage converter; and
a processing unit;
wherein the power supply provides a secondary voltage to the voltage converter when the electronic device is in the standby state; the voltage converter converts the secondary voltage to a working voltage when the voltage converter receives the enable signal and forgoes generating the working voltage when the voltage converter fails to receive the enable signal; and
wherein the processing unit is powered by the working voltage to generate the enable signal and output the enable signal to the voltage converter, the processing unit further generates a control signal when the processing unit determines that the wake-up signal received by the receiving unit is a power-on command, the power supply powers the load in response to the control signal.

12. The electronic device of claim 11, wherein the processing unit stops generating the enable signal and the control signal when the processing unit determines that the wake-up signal received by the receiving unit is not the power-on command, and the voltage converter stops outputting the working voltage to the processing unit after the first predetermined time period.

13. The electronic device of claim 11 or 12, wherein the power supply powers the receiving unit and provides the secondary voltage to the control unit when the electronic device is in the standby state, the receiving unit continuously generates a first level signal for the first predetermined time period when the receiving unit receives a wake-up signal and stops generating the first level signal after the first predetermined time period, the receiving unit generates a second level signal when the receiving unit does not receive the wake-up signal.

14. The electronic device of claim 13, wherein the control unit is charged-up by the secondary voltage in response to the first level signal to generate the enable signal, the control unit discharges in response to the second level signal to generate the enable signal, the first predetermined time period is equal to a sum of the charging time period and the discharging time period.

15. The electronic device of claim 14, wherein the voltage converter comprises an enable terminal for receiving the enable signal, the control unit comprises a transistor and an electrolytic capacitor, a base of the transistor receives the first level signal or the second level signal, an emitter of the transistor receives the secondary voltage, an anode of the electrolytic capacitor is connected to a collector of the transistor and the enable terminal, a cathode of the electrolytic capacitor is grounded.
